# EUROPÄISCHE PATENTANMELDUNG

(11) **EP 2 687 081 A2**
(43) Veröffentlichungstag der Anmeldung: **22.01.2014**
(21) Anmeldenummer: 13162138.5
(22) Anmeldetag: 03.04.2013
(51) Int. Cl.: A01D 45/02, A01D 69/12

(54) **Vorsatzgerät für eine Erntemaschine**

(30) Priorität: 20.07.2012 DE 102012106604
(71) Anmelder: CLAAS Hungaria Kft., 5200 Törökszentmiklos (HU)
(72) Erfinder: Tilly, Thomas, 48231 Warendorf (DE); Engler, Thomas Dennis, 87656 Germaningen (DE)

(57) **Zusammenfassung**

Ein Vorsatzgerät für eine Erntemaschine umfasst wenigstens zwei zwischen einer Arbeitsstellung und einer Transportstellung gegeneinander schwenkbare Module (4, 5), die jeweils wenigstens ein Erntewerkzeug (7; 12; 14) und wenigstens einen Wellenabschnitt (15; 17; 30; 34) zum Antreiben des Erntewerkzeugs (7; 12; 14) tragen, und eine die Wellenabschnitte (15; 17; 30; 34) in der Arbeitsstellung drehmomentschlüssig verbindende Kupplung (16). Ein die Kupplung (16) mit Schmierstoff versorgender Schmierstoffkanal (41, 42) ist durch wenigstens einen der Wellenabschnitte (15; 17; 30; 34) geführt.

## Beschreibung

Die vorliegende Erfindung betrifft ein Vorsatzgerät für eine selbstfahrende Erntemaschine wie etwa einen Mähdrescher, einen Feldhäcksler oder dergleichen.

Um große Flächen in kurzer Zeit abernten zu können, ist es wünschenswert, über ein Vorsatzgerät mit einer möglichst großen Arbeitsbreite zu verfügen. Wenn allerdings die Arbeitsbreite des Vorsatzgeräts die für Fahrzeuge auf öffentlichen Straßen maximal zulässige Breite überschreitet, darf sich eine Erntemaschine mit Vorsatzgerät nicht mehr ohne Weiteres auf öffentlichen Straßen bewegen. Um dieses Problem zu lösen, sind im Wesentlichen zwei Ansätze verbreitet. Der eine ist, das Vorsatzgerät getrennt von der Erntemaschine, z.B. auf einem von ihr gezogenen Anhänger, zum Einsatzort zu befördern und es erst auf dem Feld an die Erntemaschine zu koppeln. Der zweite ist, das Vorsatzgerät in gegeneinander schwenkbare Module zu gliedern, so dass für die Straßenfahrt die Breite des Vorsatzgeräts durch Schwenken der Module reduziert werden kann. Dieser Ansatz ermöglicht zwar eine schnelle Umrüstung von Straßenfahrt auf Feldeinsatz, erfordert aber vom Benutzer aufmerksamen Umgang, da zur Übertragung von Antriebsdrehmoment zwischen den Modulen Kupplungen benötigt werden, die bei unzureichender Schmierung schnellem Verschleiß unterliegen. Auch innerhalb eines Moduls gibt es eine Vielzahl von gegeneinander beweglichen Teilen, deren Lager zuverlässig geschmiert sein müssen.

Aufgabe der Erfindung ist, ein Vorsatzgerät für eine selbstfahrende Erntemaschine zu schaffen, bei dem der Wartungsaufwand für die Schmierung verringert ist.

Die Aufgabe wird gelöst, indem bei einem Vorsatzgerät für eine Erntemaschine mit wenigstens zwei zwischen einer Arbeitsstellung und einer Transportstellung gegeneinander schwenkbaren Modulen, die jeweils wenigstens ein Erntewerkzeug und wenigstens einen Wellenabschnitt zum Antreiben des Erntewerkzeugs tragen, und mit einer die Wellenabschnitte der Module in der Arbeitsstellung drehmomentschlüssig verbindenden Kupplung ein die Kupplung mit Schmierstoff versorgender Schmierstoffkanal durch wenigstens einen der Wellenabschnitte geführt ist. Ein solcher Kanal ermöglicht eine kontinuierliche Schmierstoffversorgung, während das Vorsatzgerät in der Arbeitsstellung in Betrieb ist, so dass Schäden an der Kupplung aufgrund mangelhafter Schmierung vermieden werden können.

Der Schmierstoffkanal ist vorzugsweise aus einer Schmierstoffkammer gespeist, die sich ringförmig um den Wellenabschnitt erstreckt. So kann ein Einlass des Schmierstoffkanals in jeder Drehstellung des Wellenabschnitts mit der Schmierstoffkammer in Verbindung stehen.

Ein den Wellenabschnitt unterstützendes Wälzlager kann zweckmäßigerweise in der Schmierstoffkammer aufgenommen sein. So ist auch eine kontinuierliche Schmierstoffversorgung des Wälzlagers gewährleistet.

Als Kupplung zum drehmomentschlüssigen Verbinden der Wellenabschnitte kommt eine formschlüssige Kupplung, beispielsweise eine Klauenkupplung, in Betracht. Wenn diese auf einem Kranz angeordnete, in der Arbeitsstellung ineinandergreifende Klauen aufweist, kann der Schmierstoffkanal zweckmäßigerweise ins Innere des Kranzes einmünden, so dass sich der Schmierstoff durch Fliehkraftwirkung auf den Klauen verteilen kann.

Um eine große Arbeitsbreite zu erreichen, sollten vorzugsweise drei gegeneinander schwenkbare Module, ein zentrales und zwei seitliche Module, vorhanden sein. Damit die seitlichen Module in der Transportstellung nicht die Sicht eines Fahrers der Erntemaschine behindern, sollten sie zwischen der Arbeitsstellung und der Transportstellung vorzugweise um 180° schwenkbar sein.

Um eine maximale Arbeitsbreite realisieren zu können, sollte die seitlichen Module in der Transportstellung vorzugsweise übereinander zum Liegen kommen. Dazu sind sie zweckmäßigerweise um unterschiedlich hoch gelegene Achsen schwenkbar.

In der Praxis wird jedes Modul in der Regel eine Mehrzahl von Arbeitswerkzeugen wie etwa Pflück-und/oder Einzugswalzen, Förderketten, Mäh- oder Häckselmesser aufweisen. Wenn jedes dieser Werkzeuge über eine von dem Wellenabschnitt des Moduls abgehende Verzweigung angetrieben ist, und jede dieser Verzeigungen eine eigene Schmierstoffkammer hat, dann ist die regelmäßige Kontrolle und Wartung dieser Schmierstoffkammern für einen Benutzer mit erheblichem Aufwand verbunden. Um diesen Aufwand zu reduzieren, sind die Verzweigungen vorzugsweise in einer gemeinsamen Schmierstoffkammer aufgenommen.

Um das Risiko von Schmierstofflecks entlang des Wellenabschnitts zu minimieren, ist es zweckmäßig, wenn die gemeinsame Schmierstoffkammer an die oben erwähnte ringförmige Schmierstoffkammer angrenzt. Im Extremfall können sogar beide Kammern miteinander verschmolzen sein.

Zur Realisierung der Verzeigungen kommen insbesondere Kegelradgetriebe in Betracht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Teilansicht eines erfindungsgemäßen Vorsatzgeräts;
- Fig. 2: eine schematische Darstellung des Antriebssystems des Vorsatzgeräts;
- Fig. 3: einen schematischen Schnitt durch einen Wellenabschnitt des erfindungsgemäßen Vorsatzgeräts; und
- Fig. 4: einen Schnitt durch einen Wellenabschnitt gemäß einer zweiten Ausgestaltung der Erfindung.

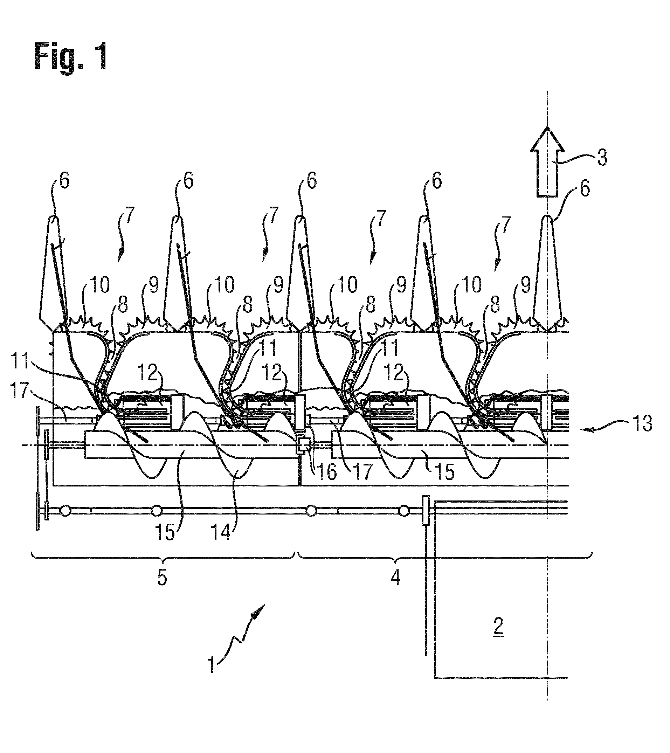

Fig. 1 ist eine teilweise aufgeschnittene schematische Draufsicht auf ein Vorsatzgerät zum Ernten von Körnermais. Gezeigt ist nur eine bezogen auf die Fahrtrichtung 3 der Erntemaschine linke Hälfte des Vorsatzgeräts 1, die nicht gezeigte rechte Hälfte ist im Wesentlichen spiegelbildlich zur gezeigten ausgebildet.

Das Vorsatzgerät 1 ist gegliedert in ein zentrales Modul 4 und an dieses angelenkte linke und rechte seitliche Module, wobei in Fig. 1 nur der linke Modul 5 zu sehen ist.

Der zentrale Modul 4 weist hier insgesamt fünf Halmteiler 6 auf, die jeweils paarweise eine Einzugseinrichtung 7 begrenzen. Der seitliche Modul 5 hat zwei Halmteiler 6 und zwei Einzugseinrichtungen 7, von denen eines durch den äußersten linken Halmteiler 6 des zentralen Moduls 4 begrenzt ist.

Jede Einzugseinrichtung 7 umfasst beiderseits eines Führungskanals 8 angeordnete, ineinander eingreifende und drehangetriebene Fördersterne 9, 10 deren Drehung den Stängel einer zu erntenden Pflanze in den Führungskanal 8 hineinzieht. Ein weiterer Förderstern 11 zieht den Halm weiter durch den Führungskanal 8 und lenkt ihn quer zur Fahrtrichtung 3 um, um ihn einer Pflückeinrichtung 12 zuzuführen. Deren paarweise rotierende Walzen lösen die Fruchtstände, hier die Maiskolben, vom Halm. Die abgetrennten Maiskolben gelangen in den Einzugsbereich einer Förderschnecke 13. Die Förderschnecke 13 erstreckt sich über die gesamte Breite des Vorsatzgeräts 1 und setzt sich zusammen aus mehreren, jeweils eine Wendel 14 tragenden Wellenabschnitten 15, die jeweils an der Grenze zwischen zwei Modulen 4, 5 durch eine Klauenkupplung 16 drehmomentschlüssig verbunden sind. Die Drehung der Förderschnecke 13 verschiebt das Erntegut zur Mitte des Vorsatzgeräts, von wo es an einen Schrägförderer 2 der das Vorsatzgerät 1 tragenden Erntemaschine übergeben wird.

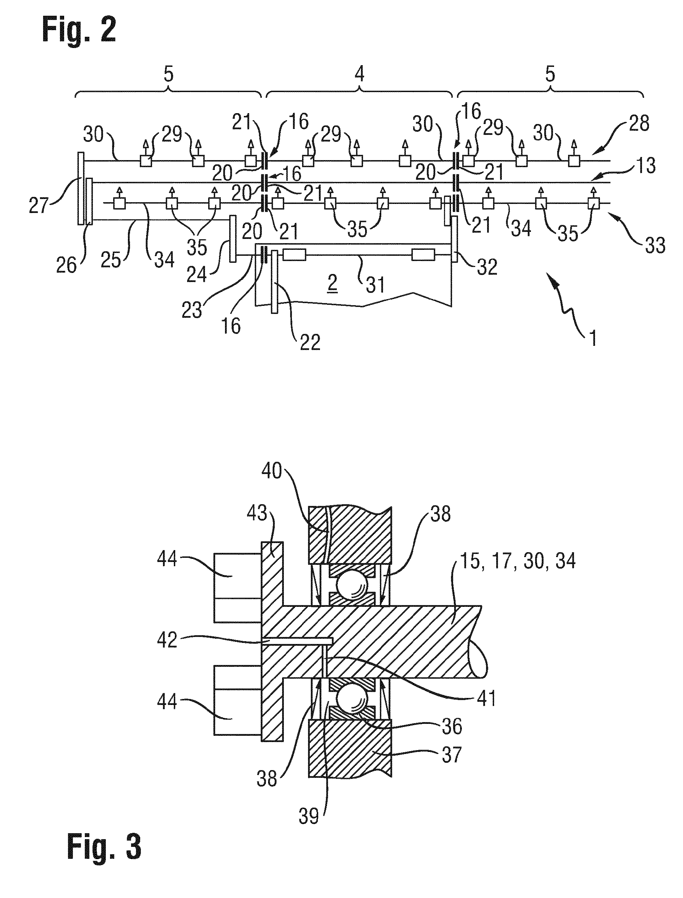

Eine entsprechend durch Klauenkupplungen 16 in sich jeweils über eines der Module 4, 5 erstreckende Abschnitte 17 gegliederte Welle treibt die Pflückeinrichtungen 12 und die Fördersterne 9, 10, 11 der Einzugseinrichtung 7 an. Über eine weitere Welle sind in der Darstellung der Fig. 1 nicht sichtbare Häckselvorrichtungen zuschaltbar, um nicht geerntetes Material, insbesondere Stängel der Maispflanzen zu häckseln und wieder auf die beerntete Fläche auszugeben. Die Klauenkupplungen 15 weisen jeweils ein Paar Klauen 20, 21 auf, die formschlüssig miteinander in Eingriff bringbar sind, wie in Fig. 2 dargestellt ist.

In Transportstellung des Vorsatzgerätes sind die zwei seitlichen Module 5 an Scharnieren über den zentralen Modul 4 geklappt. Klauen 20, 21 der Kupplungen 16, die in der Arbeitsstellung ineinander eingreifen und die Abschnitte 15 der Förderschnecke 13 verbinden, sind in der Transportstellung voneinander getrennt.

Fig. 2 ist eine schematische Darstellung des Antriebssystems des Vorsatzgeräts 1. Ein Riemenantrieb 22 ist an einen nicht dargestellten Antriebsmotor der Erntemaschine gekoppelt und treibt über eine Klauenkupplung 16 an seiner Abtriebswelle 23 einen Variator 24 des linken seitlichen Moduls 5 an. Eine Abtriebswelle 25 des Variators 24 treibt über Riemenantriebe 26, 27 zum einen die Förderschnecke 13 und zum anderen die hier mit 28 bezeichnete Welle an, deren Abschnitte 17 in Fig. 1 gezeigt sind. Entlang der Abschnitte 17 sind Verzweigungen 29 verteilt, von denen jede eine der Einzugseinrichtungen 7 und Pflückeinrichtungen 12 antreibt. Wie die Förderschnecke 13 ist auch die Welle 28 in Abschnitte 17 gegliedert, die jeweils über an den Grenzen der Module 4, 5 angeordnete Klauenkupplungen 16 drehmomentschlüssig verbunden sind.

Parallel zum Variator 24 treibt der Riemenantrieb 22 über eine Gelenkwelle 31 einen weiteren Riemenantrieb 32 an der rechten Seite des Schrägförderers 2 an. Auch dieser Riemenantrieb 32 kann als Variator ausgebildet sein. An diesem Riemenantrieb 32 ist abtriebsseitig eine weitere Welle 33 angeschlossen, welche wiederum über entlang ihrer Abschnitte 34 verteilte Verzweigungen 35 die Pflückeinrichtungen 12 antreibt.

Fig. 3 zeigt einen schematischen Querschnitt durch einen Teil eines Wellenabschnitts, bei dem es sich um einen Wellenabschnitt 15 bzw. 17 der Förderschnecke 13, die Welle 23 oder einen Abschnitt 30 bzw. 34 der Welle 28 bzw. 33 handeln kann. Der Wellenabschnitt ist über ein Wälzlager 36 in einer Seitenwand 37 eines Moduls 4 oder 5 gelagert. Dichtungen 38 beiderseits des Wälzlagers 36 begrenzen eine Kammer 39, die das Wälzlager 36 aufnimmt und über einen in oder entlang der Seitenwand 37 geführten Kanal 40 mit Schmierstoff zwangsversorgt ist. Eine Stichbohrung 41 in der Welle verbindet die Kammer 39 mit einer axialen Bohrung 42, die zentral auf einen Flansch 43 der Klauenkupplung 16 mündet. Schmierstoff, der von der Kammer 39 über die Bohrungen 41, 42 die Klauenkupplung erreicht, verteilt sich dort radial auf die auf einem Kranz rings um die Bohrung angeordneten Klauen 44.

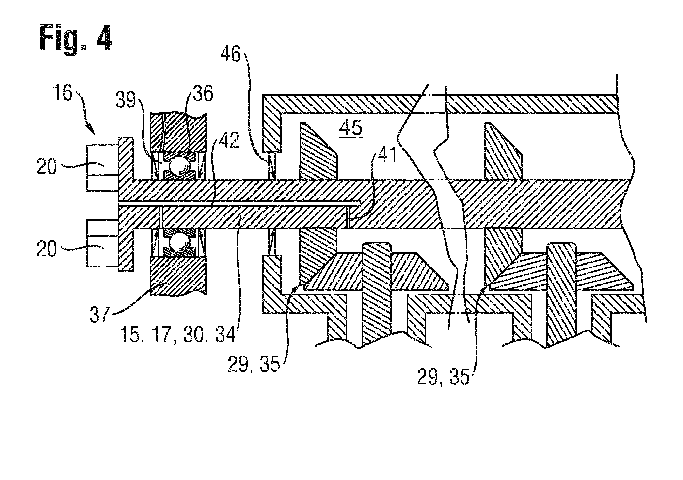

Einer in Fig. 4 gezeigten Weiterbildung zufolge versorgt die axiale Bohrung 42 nicht nur die Klauenkupplung 16, sondern auch eine Schmierstoffkammer 45 im Innern des Moduls 4 oder 5, in welchem zwei oder mehrere der Verzweigungen 29 bzw. 35 zum Antreiben der Einzugseinrichtungen 7 bzw. der Pflückeinrichtungen 12 untergebracht sind. Die Verzweigungen sind hier als Kegelgetriebe dargestellt, doch versteht sich, dass z.B. auch Kettenantriebe oder dergleichen zum Einsatz kommen können.

In der Darstellung der Fig. 4 erstreckt sich die axiale Bohrung 42 nur bis zu der zur Kammer 39 nächstbenachbarten Verzweigung 29/35, und die anderen Verzweigungen sind geschmiert, indem alle Verzweigungen in ein gemeinsames Schmierstoffbad in der Kammer 45 eintauchen. Denkbar ist natürlich auch, die axiale Bohrung 42 so zu verlängern, dass jede Verzweigung über eine auf sie mündende Stichbohrung 41 versorgt werden kann.

Denkbar ist auch eine Umkehrung des Schmierstoffflusses, bei dem aus der Kammer 45 die Klauenkupplung 16 und die Kammer 39 versorgt werden.

Des Weiteren zeigt Fig. 4 eine sich um die Welle erstreckende Dichtung 46 an einer der Seitenwand 37 zugewandten Stirnseite der Kammer 45. Diese Dichtung 46 kann wegfallen, wenn die Wände der Schmierstoffkammer 45 unmittelbar an die Seitenwand 37 anschließen.

**Bezugszeichen**

| | |
|---|---|
| 1 | Vorsatzgerät |
| 2 | Schrägförderer |
| 3 | Fahrtrichtung |
| 4 | zentrales Modul |
| 5 | linkes seitliches Modul |
| 6 | Halmteiler |
| 7 | Einzugseinrichtung |
| 8 | Führungskanal |
| 9 | Förderstern |
| 10 | Förderstern |
| 11 | Förderstern |
| 12 | Pflückeinrichtung |
| 13 | Förderschnecke |
| 14 | Wendel |
| 15 | Wellenabschnitt |
| 16 | Klauenkupplung |
| 17 | Wellenabschnitt |
| 20 | Klaue |
| 21 | Klaue |
| 22 | Riemenantrieb |
| 23 | Klauenkupplung |
| 24 | Variator |
| 25 | Antriebswelle |
| 26 | Riemenantrieb |
| 27 | Riemenantrieb |
| 28 | Welle |
| 29 | Verzweigung |
| 31 | Gelenkwelle |
| 32 | Riemenantrieb |
| 33 | Welle |
| 34 | Abschnitt |
| 35 | Verzweigung |
| 36 | Wälzlager |
| 37 | Seitenwand |
| 38 | Dichtung |
| 39 | Kammer |
| 40 | Kanal |
| 41 | Stichbohrung |
| 42 | Axiale Bohrung |
| 43 | Flansch |
| 44 | Klauen |
| 45 | Schmierstoffkammer |
| 46 | Dichtung |

## Patentansprüche

1. Vorsatzgerät für eine Erntemaschine mit wenigstens zwei zwischen einer Arbeitsstellung und einer Transportstellung gegeneinander schwenkbaren Modulen (4, 5), die jeweils wenigstens ein Erntewerkzeug (7; 12; 14) und wenigstens einen Wellenabschnitt (15; 17; 30; 34) zum Antreiben des Erntewerkzeugs (7; 12; 14) tragen, und mit einer die Wellenabschnitte (15; 17; 30; 34) in der Arbeitsstellung drehmomentschlüssig verbindenden Kupplung (16), **dadurch gekennzeichnet, dass** ein die Kupplung (16) mit Schmierstoff versorgender Schmierstoffkanal (41, 42) durch wenigstens einen der Wellenabschnitte (15; 17; 30; 34) geführt ist.

2. Vorsatzgerät nach Anspruch 1, **dadurch gekennzeichnet, dass** der Schmierstoffkanal (41, 42) aus einer sich ringförmig um den Wellenabschnitt (15; 17; 30; 34) erstreckenden Schmierstoffkammer (39) gespeist ist.

3. Vorsatzgerät nach Anspruch 2, **dadurch gekennzeichnet, dass** ein den Wellenabschnitt (15; 17; 30; 34) unterstützendes Wälzlager (36) in der Schmierstoffkammer (39) aufgenommen ist.

4. Vorsatzgerät nach einem der vorhergehenden Ansprüche, **dadurch gekennzeichnet, dass** die Kupplung (16) auf einem Kranz angeordnete, in der Arbeitsstellung ineinandergreifende Klauen (44) aufweist und dass der Schmierstoffkanal (41, 42) ins Innere des Kranzes einmündet.

5. Vorsatzgerät nach einem der vorhergehenden Ansprüche, **dadurch gekennzeichnet, dass** die gegeneinander schwenkbaren Module (4, 5) ein zentrales (4) und zwei seitliche Module (5) umfassen, und dass die zwei seitlichen Module (5) zwischen der Arbeitsstellung und der Transportstellung um 180° um unterschiedlich hoch gelegene Achsen (18) schwenkbar sind.

6. Vorsatzgerät nach einem der vorhergehenden Ansprüche, **dadurch gekennzeichnet, dass** wenigstens eines der Module (4, 5) wenigstens zwei Erntewerkzeuge (7; 12) aufweist, die über von dem Wellenabschnitt (30; 34) des Moduls (4, 5) abgehende Verzweigungen (29; 35) angetrieben sind und die Verzweigungen (29; 35) in einer gemeinsamen Schmierstoffkammer (45) aufgenommen sind.

7. Vorsatzgerät nach Anspruch 6 und Anspruch 2, **dadurch gekennzeichnet, dass** die gemeinsame Schmierstoffkammer (45) an die ringförmige Schmierstoffkammer (39) angrenzt.

8. Vorsatzgerät nach Anspruch 6 oder 7, **dadurch gekennzeichnet, dass** die Verzweigungen (29; 35) durch Kegelradgetriebe gebildet sind.

9. Vorsatzgerät nach einem der Ansprüche 6 bis 8, **dadurch gekennzeichnet, dass** die Erntewerkzeuge (7; 12; 14) unter Pflück-und/oder Einzugswalzen, Förderketten, -schnecken, Mäh- oder Häckselmessern ausgewählt sind.
